# EUROPEAN PATENT SPECIFICATION

(11) **EP 0 494 686 B1**
(45) Date of publication and mention of the grant of the patent: **08.03.1995**
(21) Application number: 92100352.1
(22) Date of filing: 10.01.1992
(51) Int. Cl.: B01D 57/02, G01N 27/26

(54) **Process for effecting high efficiency separations by capillary electrophoresis**
Verfahren zum Durchführen hochwirksamer Abscheidungen durch kapillare Elektrophorese
Procédé pour l'exécution de séparations de haute efficacité par électrophorèse capillaire

(30) Priority: 11.01.1991 US 640177
(43) Date of publication of application: 15.07.1992
(73) Proprietor: MILLIPORE CORPORATION, Bedford Massachusetts 01730 (US)
(72) Inventor: Petersen, John, Acton, Massachusetts 01720 (US); Merion, Michael, Upton, Massachusetts 01568 (US)
(74) Representative: Henkel, Feiler, Hänzel & Partner

(56) References cited:
- EP-A- 0 442 315
- FR-A- 2 021 490
- GB-A- 2 229 460
- US-A- 3 471 544
- JOURNAL OF CHROMATOGRAPHY vol. 480, 1989, AMSTERDAM, NL pages 301 - 310; M.M.BUSHEY ET AL.: 'CAPILLARY ELECTROPHORESIS OF PROTEINS IN BUFFERS CONTAININGHIGH CONCENTRATIONS OF ZWITTERIONIC SALTS'
- CHEMICAL ABSTRACTS, vol. 81, no. 10, 1974, Columbus, Ohio, US; abstract no.56563A, J.F.WILLEMS: 'SUPERADDITIVITY EFFECTS IN THE PHOTOGRAPHIC BLEACHINGPROCESS' page 489 ;

## Description

### FIELD OF THE INVENTION

The present invention relates to novel zwitterions and to a process for modifying solid surfaces exposed to macromolecules, especially proteins. More particularly this invention relates to novel zwitterions and to the buffer solutions containing zwitterions used to modify solid surfaces in electrophoretic separations by capillary electrophoresis.

Capillary electrophoresis(CE) is an efficient analytical separation technique for the analysis of minute amounts of sample. CE separations are performed in a narrow diameter capillary tube, which is filled with an electrically conductive medium termed the "carrier electrolyte". An electric field is applied between the two ends of the capillary tube, and species in the sample move from one electrode toward the other electrode at a rate which is dependent on the electrophoretic mobility of each species as well as on the rate of bulk fluid movement in the tube. CE may be performed using gels or liquids in the capillary. In one liquid mode, known as capillary zone electrophoresis (CZE), separations are based on differences in the free solution mobility of sample species. In another liquid mode, micelles are used to effect separations based on differences in hydrophobicity. This is known as Micellar Electrokinetic Capillary Chromatography. In capillary gel electrophoresis the capillary tube is filled with an electrically conductive gel rather that with liquid electrolyte. The gel functions as an anticonvective medium and minimizes sample band spreading. In CZE, a high molecular weight solute such as a polyethylene oxide or hydroxymethyl cellulose can be added to the solvent to provide sieving effects analagous to those supplied by a gel.

CE is advantageous for several reasons. These include short separation times, high resolution and small sample size. For example, separation speeds using CE can be 10 to 20 times faster than conventional gel electrophoresis. In part, high resolution can be obtained through the use of high voltages because of the rapid dissipation of heat by the capillary. Further, band broadening due to convection is minimized due to the narrow capillary inner diameter. In electrophoresis, the phenomenon of electroosmosis, or electroosmotic flow (EOF) occurs. This is a bulk flow of liquid which can move in either direction within the capillary tube and which affects all of the sample molecules regardless of charge. EOF can contribute to separation speed in free zone CE. CE in small capillaries (less than or equal to 100 »m) has proven useful as a method of separating small molecules and, under certain special conditions (pH less than 3 or pH greater than 9), has been useful for macromolecule and protein separations. The conditions under which protein analysis can be successfully conducted depend on the isoelectric point (pI) of the proteins being analyzed and the tendency of proteins to adsorb to the capillary surface. It is desirable to reduce protein adsorption on the capillary surface since it interferes with the desired protein separation within the capillary. Jorgenson et al, Science, 222 (1983) page 266 have noted that attempts to separate cytochrome C, lysozyme and ribonuclease A, in untreated fused silica capillaries with a phosphate buffer at pH 7 were accompanied by strong tailing and suggested this might be caused by Coulombic interactions of the positively charged proteins and the negatively charged capillary wall. This coulombic interaction can be decreased through the use of buffers with high salt concentrations; K₂SO₄ in particular is effective for this purpose (as shown by) Green and Jorgenson, J. Chromatogr.,478 (1989) 63. However, the high conductivity of these buffer solutions limits the applied potential to 5kV even when a relatively narrow 25 um capillary is used to allow adequate heat dissipation. The result of the use of relatively low voltage is long analysis times, e.g., 60 minutes.

Subsequently, Bushey and Jorgenson, J. Chromatog. 480 (1989) 301-310 attempted to use amino acids or amino acid derivatives to eliminate the need for potassium sulfate. However, they were unable to obtain high efficiencies without adding some K₂SO₄ to the solution and were still limited to 25 »m capillaries. An additional disadvantage of some of the amino acid derivatives Jorgenson examined is the strong UV absorbance of these compounds at short wavelengths ( 220nm) since this absorbance causes interference with the detectors used in conjunction with the CE process.

Efficiency of separation in CE can be reported as the number of theoretical plates (N) calculated from measurements of the migration time (retention time) and peak width of a compound of interest. For the purpose herein, column efficiencies are reported in terms of plates at half height where N is equal to 5.54 times the square of the retention time divided by the square of the peak width at half height.

Since the efficiency of the separation process is proportional to the field strength (see Wallingford and Ewing, Adv, Chromatogr. 29 (1989) pp. 5-8), it is desirable to operate at the highest possible field strength. Field strength is ultimately limited by the ability of the capillary to dissipate heat and the amount of heat generated by the buffer system. While smaller capillaries dissipate heat more efficiently, increasing the diameter of the capillary in the CE process increases the size of the on column detector cells and the detector concentration sensitivity. Thus, it is desirable to minimize the heat generated by the buffer system which is equivalent to minimizing the conductivity of the buffer.

### SUMMARY OF THE INVENTION

The present invention provides amino sulfonate, amino sulfate and novel phosphonium sulfonate zwitterions which are useful in CE for the high efficiency separations of macromolecules such as proteins, peptides, nucleic acids, carbohydrates, synthetic polymers or the like. In contrast to the amino acid zwitterions utilized in the CE process of the prior art, the buffer to which the zwitterion is added in this invention does not require the use of added salts such as potassium sulfate to effect the separation. In addition, the buffer solutions containing the zwitterions of this invention are characterized by a relatively low conductivity so that the buffer solution is useful at high field strength, e.g., 200-300 V/cm and in relatively large capillaries having a diameter up to about 100 microns. The CE process of this invention can be effected under conditions which maintain EOF within the capillary. The CE process of this invention while limiting UV absorbance by the buffer so that detection can be effected at wavelengths as low as 185 nm. In addition, the present invention can be conducted without the need for an internal coating within the capillary.

### BRIEF DESCRIPTION OF THE DRAWINGS

Figure 1 is an electropherogram of a mixture of lysozyme, cytochrome C, carbonic anhydrase and beta lactoglobulin run at pH 7 in a solution of phosphate buffer and triethylammoniumpropylsulfonate of Example 1.

Figure 2 is an electropherogram of a mixture of lysozyme and cytochrome C, run at pH 7 in a solution of phosphate buffer and tripropylammoniumpropylsulfonate of Example 2.

Figure 3 is an electropherogram of lysozyme and formamide run at pH 7 in a solution of phosphate buffer and trimethylammoniumpropylsulfonate of Example 3.

Figure 4 is an electropherogram of a mixture of lysozyme, cytochrome C and carbonic anhydrase, run at pH 4.4 in a solution of phosphate buffer and triethylammoniumpropylsulfonate of Example 4.

Figure 5 is an electropherogram of lysozyme and formamide run at pH 7 in a solution of phosphate buffer and the biszwitterion of Example 5.

Figure 6 is an electropherogram of the same sample as in Figure 5 in pH 7 buffer without the zwitterion.

Figure 7 is an electropherogram of egg white run at pH 7.0 in a solution of phosphate buffer and triethylammoniumpropylsulfonate of Example 6.

Figure 8 is an electropherogram of the same sample as Figure 7 using the trimethylammoniumpropylsulfonate zwitterion in place of the triethyl compound.

Figure 9 is an electropherogram of lysozyme and formamide run at pH 7 in a solution of phosphate buffer and the trimethylphosphoniumpropylsulfonate of Example 7.

### DESCRIPTION OF SPECIFIC EMBODIMENTS

This invention provides a process for effecting electrophoretic separation of molecules in a capillary, which comprises introducing into the capillary a buffer solution containing a zwitterion or zwitterions comprised of substantially equal numbers of positive and negative charges where the negative charge or charges are derived from sulfonate or sulfate groups and the positive charge or charges are derived from quaternary amines, quaternary phosphines or quaternary arsines. The sample then is introduced into the capillary and an electrical field is established through said capillary to cause the sample to migrate through the capillary. In the monomeric zwitterions used in this invention, the negative and positive charges are equal. In the polymeric zwitterions used in this invention, the number of positive and negative charges are substantially equal. The term "substantially equal" as used herein and referring to these charges means equal or only slightly different. Where the numbers of positive and negative charges are slightly different, the difference arises from charges associated with polymer initiation or termination or with partial hydrolysis of the polymer resulting in the formation of charged groups. The monomers from which the polymers are made do contain equal numbers of positive and negative charges.

Representative suitable zwitterions are described by one of the following formulas:

R, R¹,R²N(CH₂)ₓY Formula I

R, R¹,R²P(CH₂)ₓY Formula II

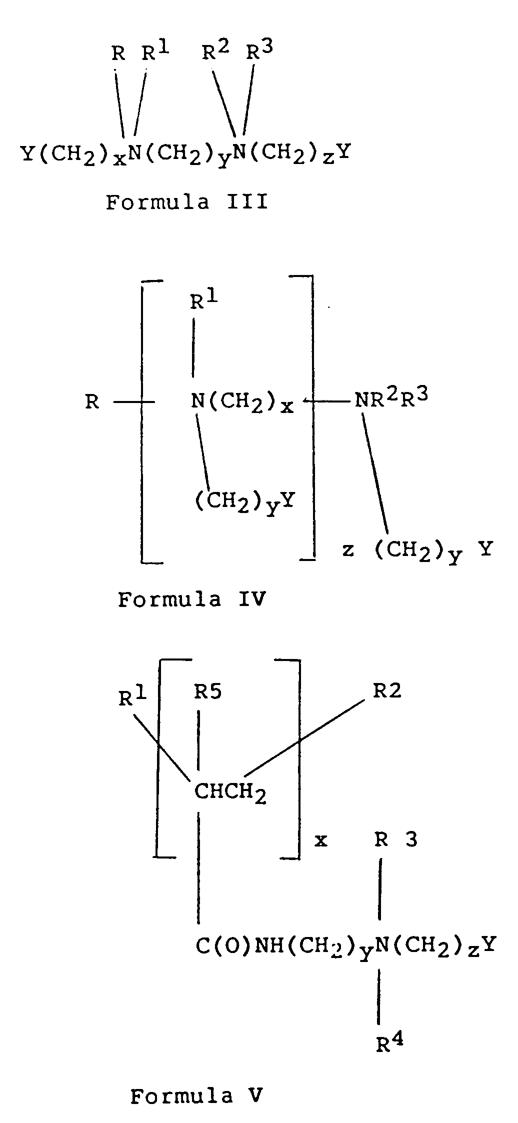

and mixtures thereof wherein x, y and z can be the same or different and are integers from 1 to 30 (in the case of formula V, x can range from 1 to 10,000); R, R1, R2, R3, R4, and R5 can be the same or different and are hydrogen, alkyl groups containing from 1 to 30 carbon atoms, two R groups bonded to the same nitrogen as part of a cyclic structure (e.g., pyrrolidine or morpholine) or hydroxyalkyl groups containing from 1 to 30 carbons. Y can be the same or different and is either sulfate or sulfonate. Preferred zwitterions include: (HOCH₂CH₃)₃N(CH₂)₃SO₃, Me₃N(CH₂)₃SO₃, Et₃N(CH₂)₃SO₃, n-Pr₃N(CH₂)₃SO₃, CH₃(CH₂)₁₁Me₂N(CH₂)₃SO₃, CH₃(CH₂)₁₃Me₂N(CH₂)₃SO₃, CH₃(CH₂)₁₅Me₂N(CH₂)₃SO₃, CH₃(CH₂)₁₇Me₂N(CH₂)₃SO₃, Me₃P(CH₂)₃SO₃, and O₃S(CH₂)₃Me₂N(CH₂)₆NMe₂(CH₂)₃SO₃. Me is methyl. Et is ethyl. N-Pr is normal propyl.

The zwitterions of this invention can be utilized in the process of this present invention either alone or in admixture. The zwitterions of this invention are utilized in admixture with the buffer solution of a capillary electrophoresis process. Any conventional buffer can be utilized such as phosphate, borate, acetate, citrate or aminosulfonate. The zwitterions are utilized at a concentration between about 10⁻⁷M and about 3.0M. The zwitterions function to interact with the charged internal surface of the capillary and to screen the surface charges so that little or no charged interaction occurs between the surface and the macromolecule being separated.

It is preferred to utilize the sulfonate form of the zwitterions of this invention since there is a reduced tendency for it to hydrolyze as compared with the sulfate ion. In addition, it is preferred to utilize zwitterions wherein x, y and z are integers from 1 to 4 since these compounds are more soluble than the zwitterions having longer carbon chains.

In use, the zwitterions or mixtures of the zwitterions of this invention are mixed with a buffer solution which then is introduced into the capillary tube of a CE apparatus. Each end of the tube is positioned in electrical contact with an electrode after a volume of sample is introduced into the inlet of the capillary. A high voltage, usually between about 100 and 200 V/cm is applied across the electrodes at the capillary inlet and at the capillary outlet. The sample molecules migrate through the capillary tube under the influence of the electric field created by the voltage applied to the electrodes. The molecules in the sample are separated from each other and are analyzed on line by a conventional detector such as a UV absorbance detector. The sample then exits the capillary tube downstream of the detector.

The following examples illustrate the present invention and are not intended to limit the same.

### EXAMPLE 1

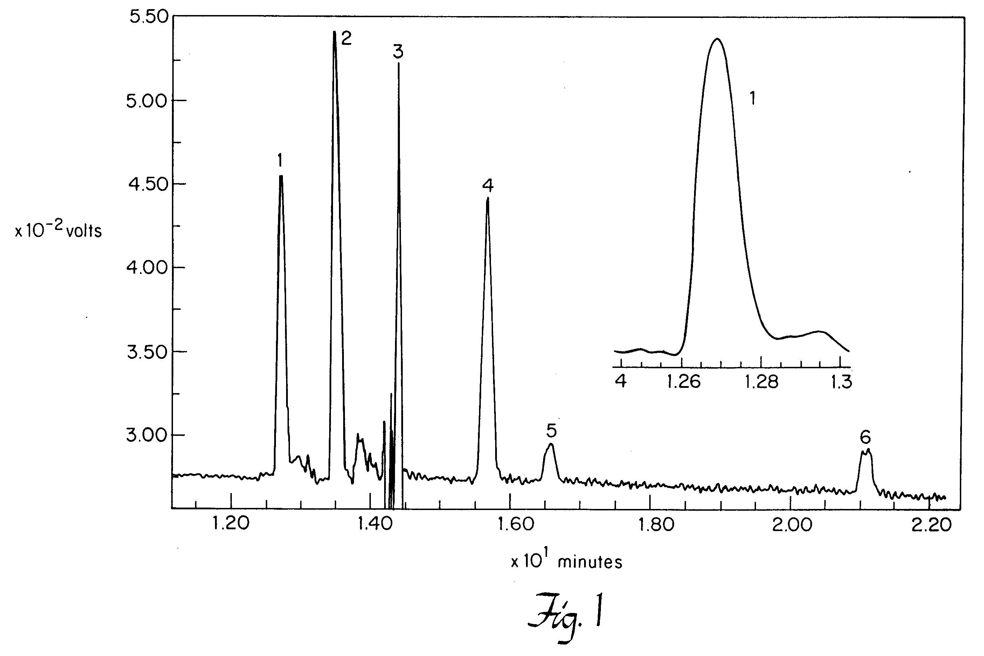

A 60 cm fused silica capillary of 50 um I.D. externally coated with polyimide (Polymicro Technologies) was freshly cut from a roll and approximately 1 cm section of polyimide coating was removed 7.5 cm from one end. The capillary was installed in a Waters Quanta 4000 with a positive power supply (cathode at detector end of capillary). The capillary was flushed with 0.5 M KOH for 5 minutes, followed by distilled water. A buffer solution was prepared by adding triethylammoniumpropylsulfonate 5.5 g to a 200 mM solution of sodium phosphate at pH 7.0 and bringing the volume to 25 ml such that the final phosphate concentration was 100 mM and the zwitterion 1M. The pH was unchanged by the addition of the zwitterion. This buffer was placed in reservoirs at the capillary inlet and outlet and the capillary was filled with the buffer. A sample containing lysozyme 100»g/mL, cytochrome C 100 »g/mL, carbonic anhydrase 100 »g/mL, beta lactoglobulin 10 »g/mL and methyl red in water was prepared. The sample was introduced into the capillary (30 sec hydrostatic injection) and the electrophoretic run conducted at 15kV (current 60 »amp). Detection was performed at 185 nm. Figure 1 illustrates the excellent separation obtained and the high efficiency of the system (72K plates for lysozyme). Peak 1 is lysozome. Peak 2 is cytochrome C. Peak 3 is a neutral marker. Peak 4 is carbonic anhydrase. Peak 5 is B lactoglobulin. Peak 6 is methyl red.

### EXAMPLE 2

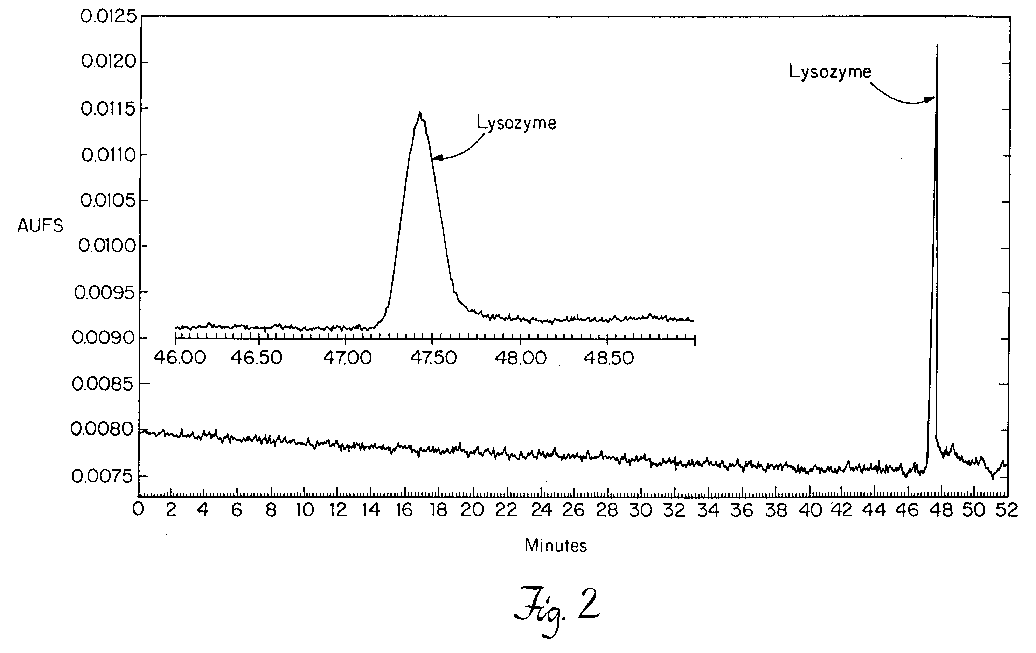

This experiment differs from example 1 in that a 75 »m capillary was used and detection was performed at 214 nm. The buffer was 200 mM phosphate, pH 7.0 containing 1M tri-n- propylammoniumpropylsulfonate. The voltage was 10kV giving a current of 75 »A. Using a smaller injected volume, 250,000 plates were obtained for lysozyme as shown in Figure 2.

### EXAMPLE 3

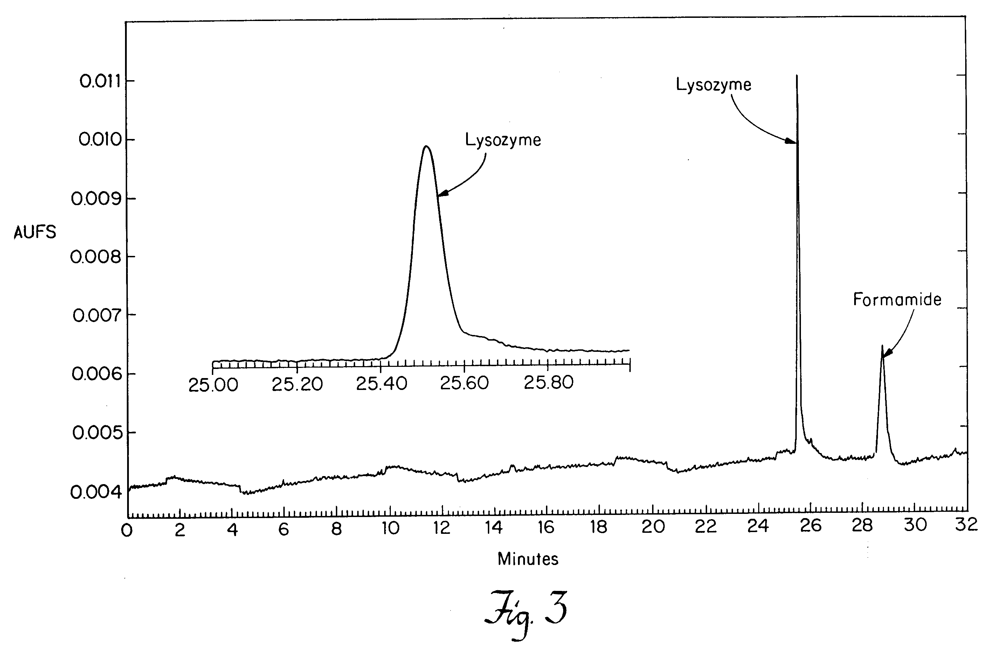

This experiment differs from example 2 in that the zwitterion was trimethylammoniumsulfonate, the concentration was 1.5 M and a smaller injection (2 second hydrostatic was used). Using a voltage of 7kV a current of 82 »A was observed and about 700,000 plates were obtained for the lysozyme peak as shown in Figure 3.

### EXAMPLE 4

The same apparatus was used as in Example 1 except that detection was at 214 nm. The running buffer was 100mM sodium phosphate at pH 4.4 containing 1M triethylammoniumpropylsulfonate. The electrophoresis was conducted at 30kV and a current of 60»A was observed. Excellent efficiencies were observed for all proteins as shown in Figure 4. Peak 1 is lysozyme. Peak 2 is cytochrome C. Peak 3 is carbonic anyhydrase. Peak 4 is methyl red.

### EXAMPLE 5

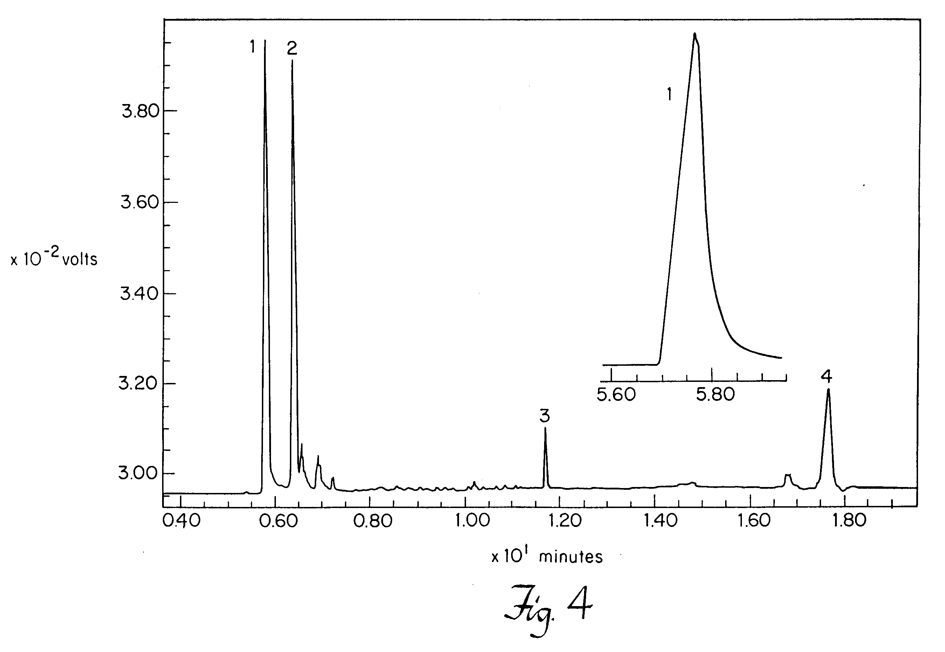

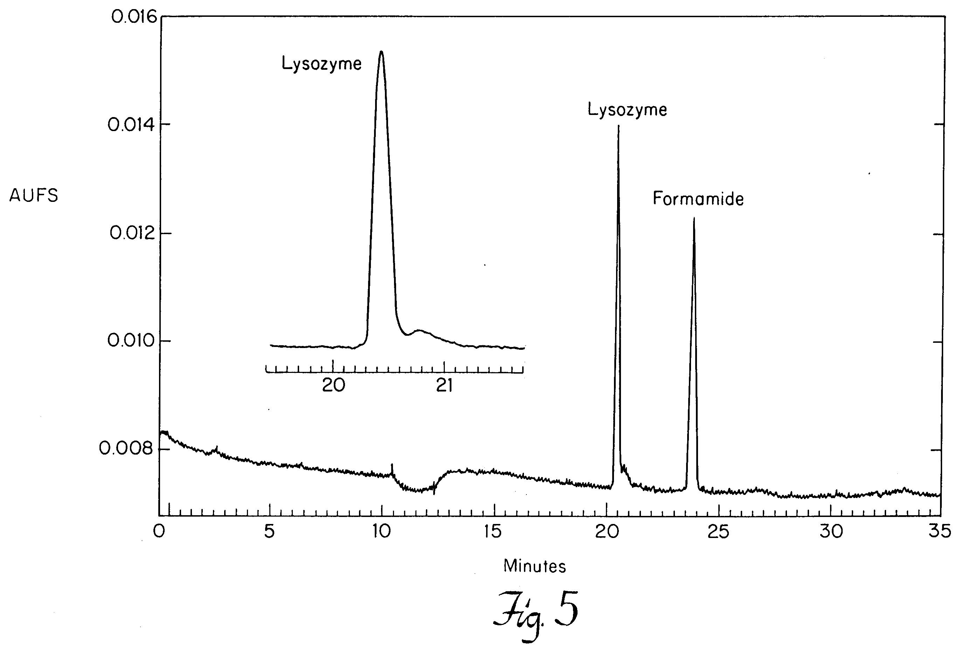

This experiment differs from example 2 in that the phosphate concentration was 120 mM and a bis-zwitterion, N, N'-bis(sulfopropyl)-N,N,N',N'tetramethyl-1,6 hexanediamine, was used. The zwitterion concentration was 0.5M. Using a voltage of 8kV a current of 62»A was observed and 87,000 plates were obtained for the lysozyme peak, Figure 5. Without the zwitterion, lysozyme elutes as a broad tailing peak as shown in Figure 6.

### EXAMPLE 6

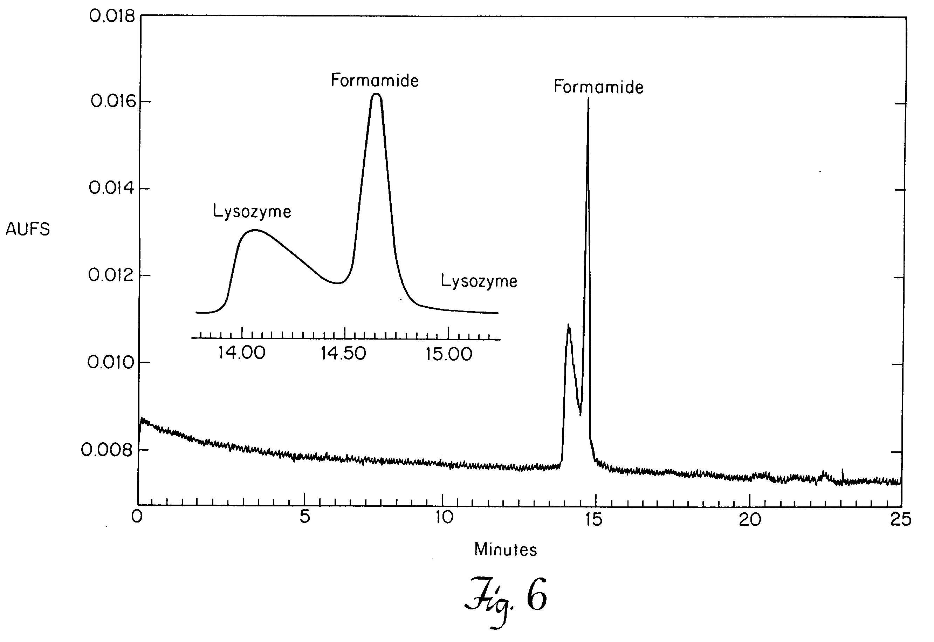

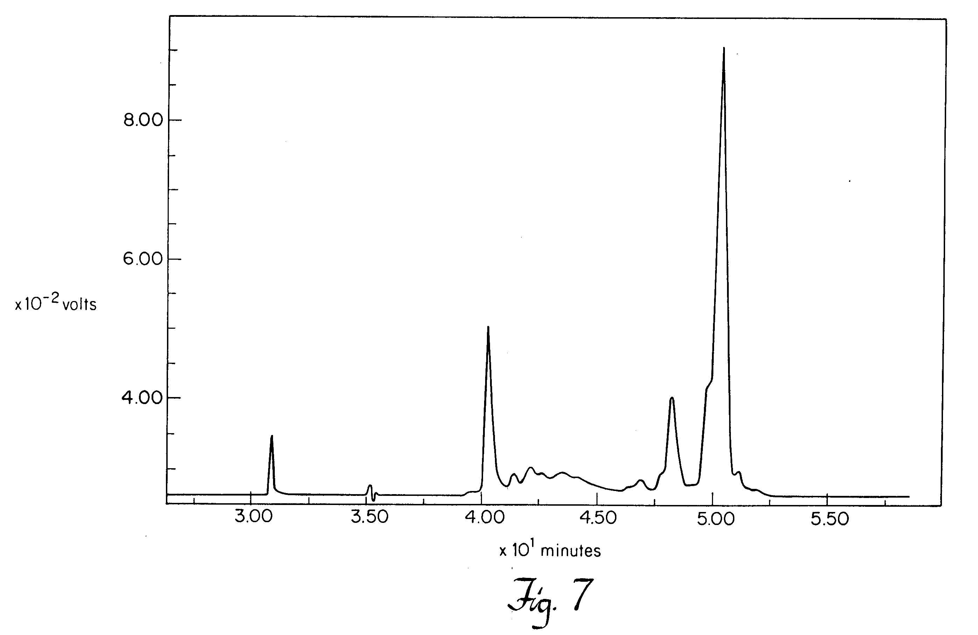

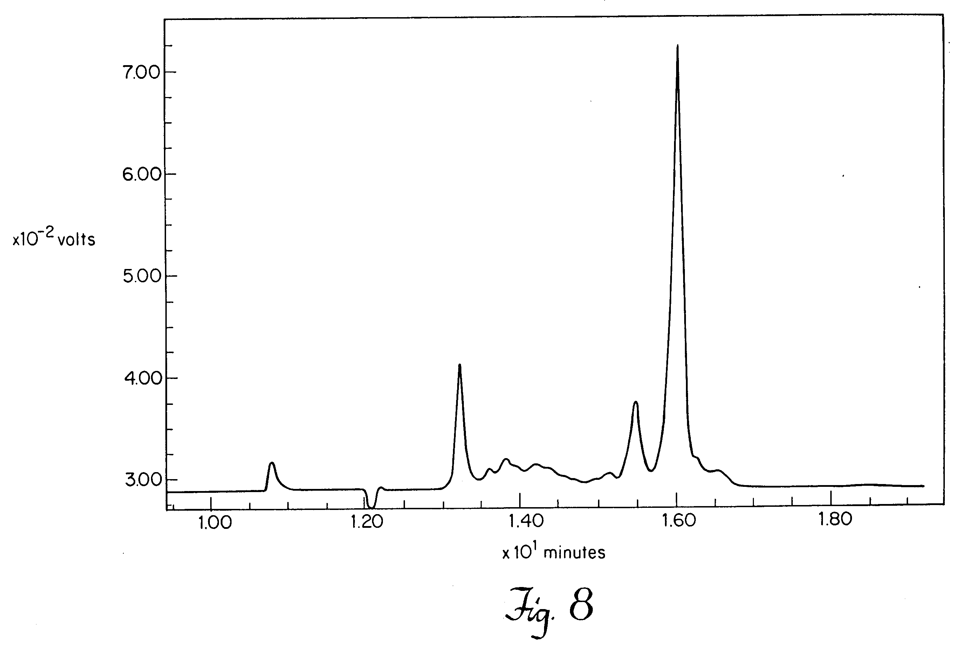

A. The same apparatus was used as in Example 1 except that a 75 »m capillary was used with detection at 214 nm. The running buffer was 180 mM sodium phosphate with 1.8M triethylammoniumpropylsulfonate. The analysis was performed at a voltage of 10kV which generated a current of 40 »A. The sample was a 5% solution of egg white in the running buffer as shown in Figure 7.
B. Conditions were the same as A except the buffer was 100mM sodium phosphate containing 1.0M trimethylammoniumpropylsufonate. The 10kV applied gave a current of 78»A and give the results shown in Figure 8.

### Example 7

### Synthesis of trimethylphosphoniumpropylsulfonate

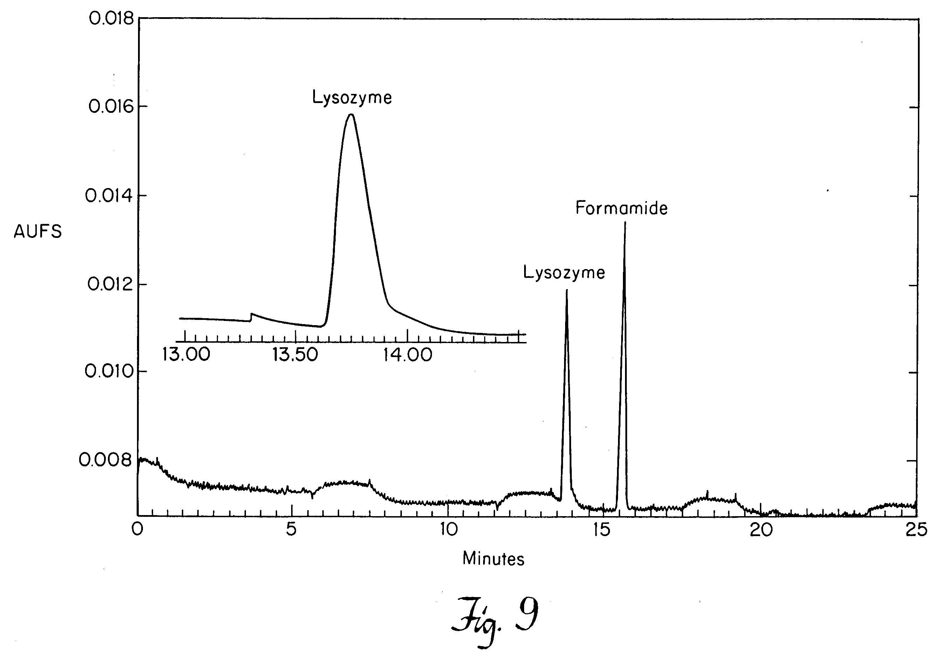

A solution of 1,3-propanesultone (36.0g) was added dropwise to a mechanically stirred solution of trimethylphosphine (24.7 g) in acetonitrile (350 mL) under a nitrogen atmosphere. The internal temperature was maintained between 5 and 10°C with an ice bath. The addition was complete in 1.5 hours. The solution was stirred for 18 hours during which time it was allowed to warm to room temperature. the product, a white crystalline solid, was recovered by filtration and washed with acetonitrile (3 x 350 mL). The salt was dried (30°C, 28 in Hg, 16h). The 1H NMR was consistent with the structure of trimethylphosphoniumpropylsulfonate. Use of trimethylphosphoniumpropylsulfonate
The same apparatus was used as in Example 1 except that a 75 »m capillary was used with detection at 214 nm. The running buffer was 120 mM phosphate containing 1M trimethyl-phosphoniumpropylsulfonate at pH 7.0. With a voltage of 8kV a current of 69 uA was observed and 37,000 plates were obtained for lysozyme as shown in Figure 9.

## Claims

1. The process for effecting electrophoretic separation of molecules in capillaries which comprises:
introducing into said capillary a buffer solution containing at least one zwitterion comprised of substantially equal numbers of positive and negative charges where the negative charges are derived from a member selected from the group consisting of sulfonate and sulfate groups and the positive charges are derived from a member selected from the group consisting of quaternary amines, quaternary phosphines and quaternary arsines, introducing said sample into said capillary and establishing an electrical field through said capillary to cause the sample to migrate through said capillary and detecting the separated analytes.

2. The process of claim 1 wherein the zwitterion is defined by a formula consisting of:
R, R¹,R²N(CH₂)ₓY Formula I 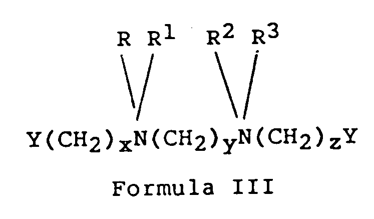 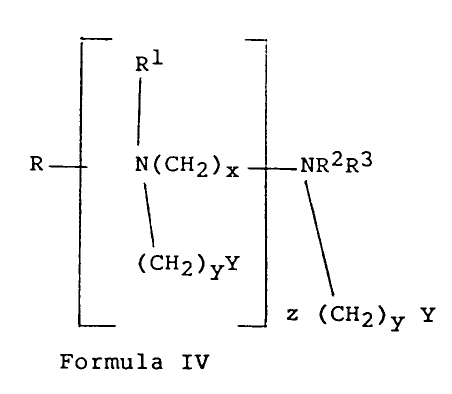
wherein x, y and z can be the same or different and are integers from 1 to 30; R, R¹, R², and R³ are the same or different and are alkyl groups containing from 1 to 30 carbon atoms or hydroxyalkyl groups containing 1 to 30 carbon atoms or two R groups bonded to the same nitrogen atom as part of a cyclic structure and Y is sulfate or sulfonate.

3. The process of claim 2 wherein the negative charges are sulfonate.

4. The process of claim 2 wherein the negative charges are sulfate.

5. The process of claim 2 wherein x, y and z are integers from 1 to 4.

6. The process of claim 1 wherein the zwitterion is Me₃N(CH₂)₃SO₃.

7. The process of claim 1 wherein the zwitterion is Et₃N(CH₂)₃SO₃.

8. The process of claim 1 wherein the zwitterion is n-Pr₃N(CH₂)₃SO₃.

9. The process of claim 1 wherein the zwitterion is (HOCH₂CH₂)₃N(CH₂)₃SO₃

10. The process of claim 1 wherein the zwitterion is CH₃(CH₂)₁₁Me₂N(CH₂)₃SO₃.

11. The process of claim 1 wherein the zwitterion is CH₃(CH₂)₁₃Me₂N(CH₂)₃SO₃.

12. The process of claim 1 wherein the zwitterion is CH₃(CH₂)₁₅Me₂N(CH₂)₃SO₃,

13. The process of claim 1 wherein the zwitterion is CH₃(CH₂)₁₇Me₂N(CH₂)₃SO₃.

14. The process of claim 1 wherein the zwitterion is Me₃P(CH₂)₃SO₃.

15. The process of claim 1 wherein the zwitterion is O₃S(CH₂)₃Me₂N(CH₂)₆NMe₂(CH₂)₃SO₃.

16. The process of claim 1 wherein the zwitterion has the formula:
R, R¹,R²P(CH₂)ₓY Formula II

17. The process of claim 1 wherein the zwitterion has the formula 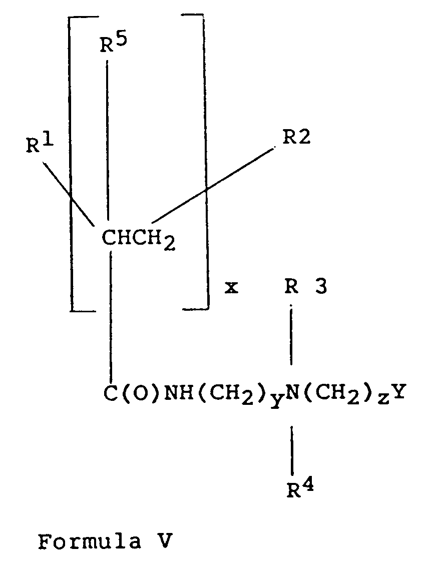 and mixtures thereof wherein y and z can be the same or different and are integers from 1 to 30; R, R¹, R², R³, R⁴ and R⁵ are the same or different and are hydrogen, alkyl groups containing from 1 to 30 carbon atoms or hydroxyyalkyl groups containing from 1 to 30 carbons, Y is sulfate or sulfonate and x is an integer within the range of 1 to 10,000.

## Patentansprüche

1. Verfahren zur Durchführung einer elektrophoretischen Trennung von Molekülen in Kapillaren durch Einbringen einer Pufferlösung mit mindestens einem Zwitterion mit einer praktisch gleichen Anzahl positiver und negativer Ladungen, wobei die negativen Ladungen von einer Einheit, ausgewählt aus Sulfonat- und Sulfatgruppen, und die positiven Ladungen von einer Einheit, ausgewählt aus quaternären Aminen, quaternären Phosphinen und quaternären Arsinen, herrühren, in die Kapillare, Einbringen der Probe in die Kapillare, Anlegen eines elektrischen Feldes an die Kapillare, um die Probe durch die Kapillare wandern zu lassen, und Nachweisen der abgetrennten Analyte.

2. Verfahren nach Anspruch 1, wobei das Zwitterion durch eine Formel, bestehend aus
R, R¹, R²N(CH₂)ₓY Formula I 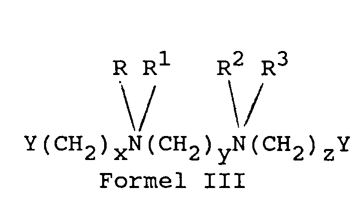 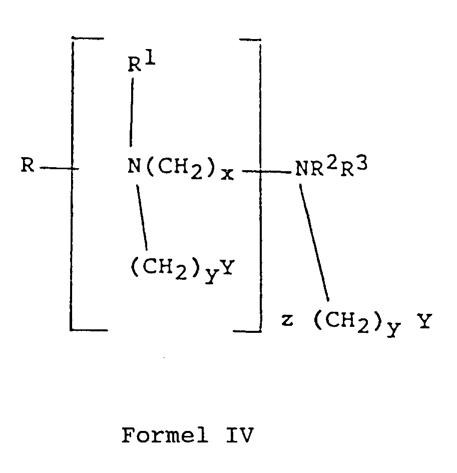
worin bedeuten:
x, y und z, die gleich oder verschieden sein können, ganze Zahlen von 1 bis 30;
R, R¹, R² und R³, die gleich oder verschieden sind, Alkylgruppen mit 1 bis 30 Kohlenstoffatom(en) oder Hydroxyalkylgruppen mit 1 bis 30 Kohlenstoffatom(en) oder zwei an dasselbe Stickstoffatom gebundene Gruppen R einen Teil einer cyclischen Struktur und
Y Sulfat oder Sulfonat,
definiert ist.

3. Verfahren nach Anspruch 2, wobei die negativen Ladungen von Sulfonat herrühren.

4. Verfahren nach Anspruch 2, wobei die negativen Ladungen von Sulfat herrühren.

5. Verfahren nach Anspruch 2, wobei x, y und z ganze Zahlen von 1 bis 4 darstellen.

6. Verfahren nach Anspruch 1, wobei das Zwitterion aus Me₃N(CH₂)₃SO₃ besteht.

7. Verfahren nach Anspruch 1, wobei das Zwitterion aus Et₃N(CH₂)₃SO₃ besteht.

8. Verfahren nach Anspruch 1, wobei das Zwitterion aus n-Pr₃N(CH₂)₃SO₃ besteht.

9. Verfahren nach Anspruch 1, wobei das Zwitterion aus (HOCH₂CH₂)₃N(CH₂)₃SO₃ besteht.

10. Verfahren nach Anspruch 1, wobei das Zwitterion aus CH₃(CH₂)₁₁Me₂N(CH₂)₃SO₃ besteht.

11. Verfahren nach Anspruch 1, wobei das Zwitterion aus CH₃(CH₂)₁₃Me₂N(CH₂)₃SO₃ besteht.

12. Verfahren nach Anspruch 1, wobei das Zwitterion aus CH₃(CH₂)₁₅Me₂N(CH₂)₃SO₃ besteht.

13. Verfahren nach Anspruch 1, wobei das Zwitterion aus CH₃(CH₂)₁₇Me₂N(CH₂)₃SO₃ besteht.

14. Verfahren nach Anspruch 1, wobei das Zwitterion aus Me₃P(CH₂)₃SO₃ besteht.

15. Verfahren nach Anspruch 1, wobei das Zwitterion aus O₃S(CH₂)₃Me₂N(CH₂)₆NMe₂(CH₂)₃SO₃ besteht.

16. Verfahren nach Anspruch 1, wobei das Zwitterion der Formel:
R, R¹, R²P(CH₂)ₓY Formula II
entspricht.

17. Verfahren nach Anspruch 1, wobei das Zwitterion der Formel: 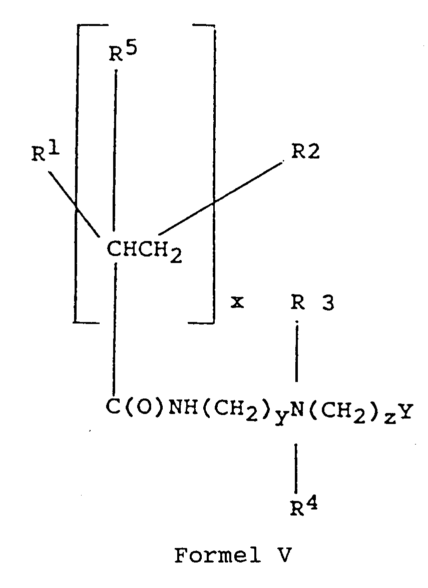 und Mischungen hiervon entspricht, worin bedeuten:
y und z, die gleich oder verschieden sein können, ganze Zahlen von 1 bis 30;
R, R¹, R², R³, R⁴ und R⁵, die gleich oder verschieden sind, Wasserstoff, Alkylgruppen mit 1 bis 30 Kohlenstoffatom(en) oder Hydroxyalkylgruppen mit 1 bis 30 Kohlenstoffatom(en);
Y Sulfat oder Sulfonat und
x eine ganze Zahl im Bereich von 1 bis 10000.

## Revendications

1. Le procédé pour effectuer une séparation électrophorétique de molécules dans des tubes capillaires, qui comporte :
l'introduction dans ledit tube capillaire d'une solution tampon contenant au moins un zwittérion constitué de nombres sensiblement égaux de charges positives et négatives, les charges négatives étant dérivées d'un élément sélectionné dans le groupe constitué par les groupes sulfonate et sulfate, et les charges positives étant dérivées d'un élément sélectionné dans le groupe constitué par les amines quaternaires, les phosphines quaternaires et les arsines quaternaires, l'introduction dudit échantillon dans ledit tube capillaire, l'établissement d'un champ électrique à travers ledit tube capillaire pour amener l'échantillon à migrer à travers ledit tube capillaire, et la détection des analytes séparés.

2. Le procédé de la revendication 1, dans lequel le zwittérion est défini par une formule consistant en :
R, R¹,R²N(CH₂)ₓY Formula I 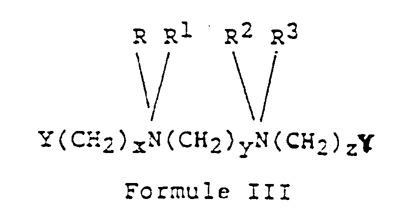 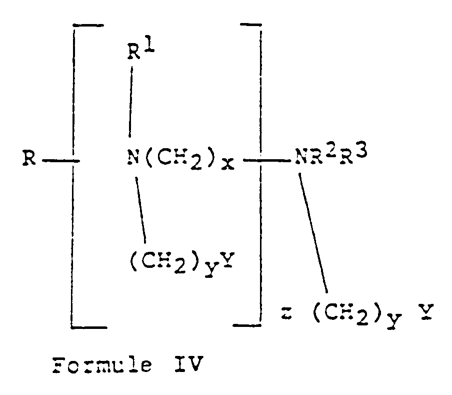
dans lesquelles x, y et z peuvent être les mêmes ou être différents et sont des nombres entiers de 1 à 30 ; R, R¹, R² et R³ sont les mêmes ou sont différents et sont des groupes alkyle contenant 1 à 30 atomes de carbone ou des groupes hydroxyalkyle contenant 1 à 30 atomes de carbone ou deux groupes R liés au même atome d'azote en tant quel partie d'une structure cyclique, et Y est un sulfate ou un sulfonate.

3. Le procédé de la revendication 2, dans lequel les charges négatives sont un sulfonate.

4. Le procédé de la revendication 2, dans lequel les charges négatives sont un sulfate.

5. Le procédé de la revendication 2, dans lequel x, y et z sont des nombres entiers de 1 à 4.

6. Le procédé de la revendication 1, dans lequel le zwittérion est Me₃N(CH₂)₃SO₃.

7. Le procédé de la revendication 1, dans lequel le zwittérion est Et₃N(CH₂)₃SO₃.

8. Le procédé de la revendication 1, dans lequel le zwittérion est n-Pr₃N(CH₂)₃SO₃.

9. Le procédé de la revendication 1, dans lequel le zwittérion est (HOCH₂CH₂)₃N(CH₂)₃SO₃

10. Le procédé de la revendication 1, dans lequel le zwittérion est CH₃(CH₂)₁₁Me₂N(CH₂)₃SO₃.

11. Le procédé de la revendication 1, dans lequel le zwittérion est CH₃(CH₂)₁₃Me₂N(CH₂)₃SO₃.

12. Le procédé de la revendication 1, dans lequel le zwittérion est CH₃(CH₂)₁₅Me₂N(CH₂)₃SO₃,

13. Le procédé de la revendication 1, dans lequel le zwittérion est CH₃(CH₂)₁₇Me₂N(CH₂)₃SO₃.

14. Le procédé de la revendication 1, dans lequel le zwittérion est Me₃P(CH₂)₃SO₃.

15. Le procédé de la revendication 1, dans lequel le zwittérion est O₃S(CH₂)₃Me₂N(CH₂)₆NMe₂(CH₂)₃SO₃.

16. Le procédé de la revendication 1, dans lequel le zwittérion présente la formule :
R, R¹,R²P(CH₂)ₓY Formula II

17. Le procédé de la revendication 1, dans lequel le zwittérion présente la formule : 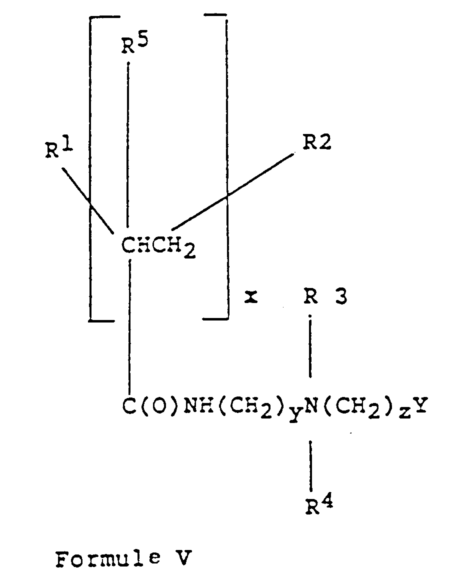 et ses mélanges, y et z pouvant être les mêmes ou pouvant être différents et étant des nombres entiers de 1 à 30 ; R, R¹, R², R³, R⁴ et R⁵ étant les mêmes ou étant différents et sont de l'hydrogène, des groupes alkyle contenant 1 à 30 atomes de carbone ou des groupes hydroxyalkyle contenant 1 à 30 atomes de carbone, Y étant un sulfate ou un sulfonate, et x étant un nombre entier dans la plage de 1 à 10.000.
